# EUROPEAN PATENT SPECIFICATION

(11) **EP 3 623 228 B1**
(45) Date of publication and mention of the grant of the patent: **30.08.2023**
(21) Application number: 18194195.6
(22) Date of filing: 13.09.2018
(51) Int. Cl.: B60R 21/01

(54) **A VEHICLE SAFETY SYSTEM AND A METHOD OF CONTROLLING A VEHICLE SAFETY SYSTEM**
FAHRZEUGSICHERHEITSSYSTEM UND VERFAHREN ZUR STEUERUNG EINES FAHRZEUGSICHERHEITSSYSTEMS
SYSTÈME DE SÉCURITÉ DE VÉHICULE ET PROCÉDÉ DE COMMANDE D'UN SYSTÈME DE SÉCURITÉ DE VÉHICULE

(43) Date of publication of application: 18.03.2020
(73) Proprietor: Veoneer Sweden Safety Systems AB, 10302 Stockholm (SE)
(72) Inventor: Caclard, Laurent, 27440 Touffreville (FR); Patel, Bankim, Canton, MI 48187 (US); Wantuck, Ron, Ann Arbor, MI 48108 (US)
(74) Representative: Forresters IP LLP

(56) References cited:
- WO-A1-2005/044638
- WO-A1-2009/142997
- WO-A2-01/45321
- JP-A- 2004 352 153
- JP-A- 2010 167 995
- JP-B2- 3 719 371
- US-A1- 2016 223 370

## Description

The present invention relates to a vehicle safety system and a method of controlling a vehicle safety system. The present invention more particularly relates to a vehicle safety system which communicates via a data bus and a method of controlling such a vehicle safety system.

A conventional vehicle safety system typically comprises an electronic control unit which is connected to a safety device and a crash sensor. The control unit is configured to provide an activation signal to the safety device to activate the safety device in the event that the crash sensor senses a crash situation.

Some safety devices, such as an air-bag, are single use devices that must be replaced after activation. It can be difficult and costly to replace a safety device so it is desirable to minimise or prevent accidental activation of the safety device.

In order to minimise or prevent accidental activation of a safety device, a conventional vehicle safety system typically uses one or more arming state signals in conjunction with an activation signal to control the deployment of the safety device. In use, the safety device is only activated if the arming state signal confirms the validity of the activation signal.

The arming state signal is generated by a safing generator which is coupled via dedicated electrical wiring to a safety device. The safing generator is typically housed within the housing of the vehicle's electronic control unit. In some configurations, the safing engine is provided on the same printed circuit board as the vehicle's electronic control unit. The safing engine is coupled to electrical connectors that are provided on the housing of the vehicle's electronic control unit. Dedicated wiring is connected between the electrical connectors and each safety device to communicate arming state signals from the safing engine to each safety device.

A problem can occur if the electrical wiring between the connectors on the housing of the vehicle's electronic control unit and a safety device or the connectors themselves become damaged such that it is not possible to communicate an arming state signal to the safety device. If this happens then the safety device can no longer use the arming state signal to confirm whether or not to activate the safety device. To minimise the risk of damage to the safety system during a crash situation, it is desirable to minimise the number of connectors on the housing of a vehicle's electronic control unit and each safety device and to minimise the amount of dedicated wiring between the housing of a vehicle's electronic control unit and each safety device.

It is also desirable to minimise the number of connectors and the amount of dedicated wiring in a vehicle safety system to reduce the cost and complexity of the vehicle safety system.

International publication no. WO2005/044638 discloses a conventional control device and acceleration sensing mechanism.

The present invention seeks to provide an improved vehicle safety system and an improved method of controlling a vehicle safety system.

According to one aspect, there is provided a vehicle safety system as defined in claim 1 hereinafter.

According to another aspect, there is provided a method as defined in claim 10 hereinafter.

So that the present invention may be more readily understood, embodiments of the present invention will now be described, by way of example, with reference to the accompanying drawings, in which:
Figure 1 is a schematic diagram of part of a vehicle safety system of some embodiments,
Figure 2 is a schematic diagram of part of a vehicle safety system of some embodiments,
Figure 3 is a schematic diagram of part of a vehicle safety system of some embodiments, and
Figure 4 is a flow diagram showing the operation of a vehicle safety system of some embodiments.

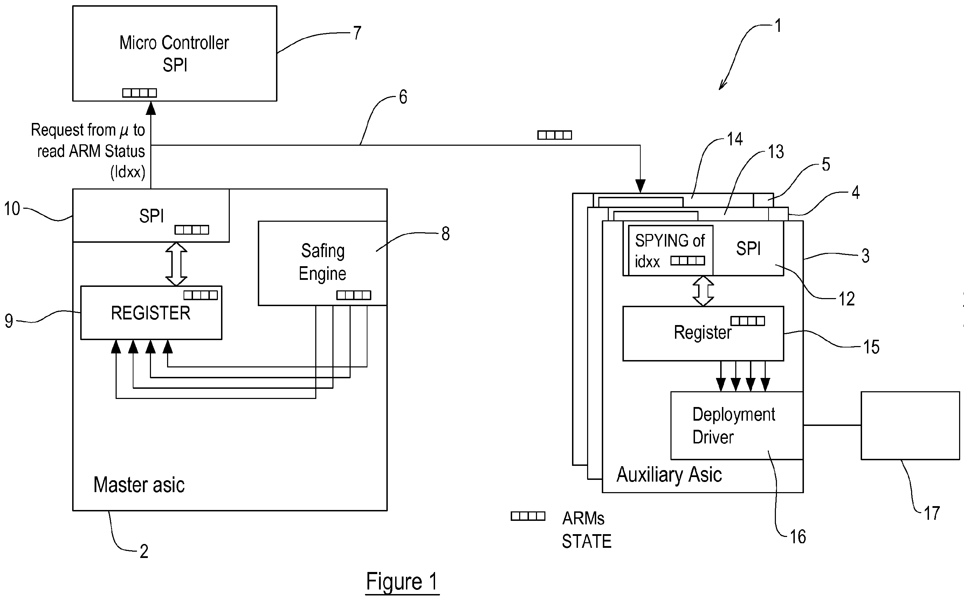

Referring initially to figure 1 of the accompanying drawings, a vehicle safety system 1 of some embodiments comprises a master control module 2 and at least one slave module 3-5. In this embodiment, the vehicle safety system 1 comprises three slave modules 3-5 but it is to be appreciated that other embodiments may incorporate a greater or fewer number of slave modules. In some embodiments, the master control module 2 and/or each of the slave modules 3-5 are implemented in a microcontroller.

The master control module 2 and the slave modules 3-5 are each configured to be coupled to a data bus 6. In this embodiment, the data bus 6 is a serial peripheral interface (SPI) data bus. The SPI data bus is a four-wire serial bus and the master control module 2 and the slave modules 3-5 each comprise electrical connectors which connect to each of the four wires of the SPI data bus.

The vehicle safety system 1 further comprises a data bus controller 7. In this embodiment, the data bus controller 7 is an SPI controller which is configured to manage data communicated via the data bus 6. In this embodiment, the data bus controller 7 is the master controller of the data bus 6 in the sense that it controls the data communicated via the data bus 6. The master control module 2, on the other hand, is a master controller in the sense of the vehicle safety system in that it is configured to control the slave modules 3-5.

The master control module 2 further comprises a safing module 8 which is configured to generate arming state data for transmission to one or more of the slave modules 3-5. The safing module 8 generates the arming state data based on signals from one or more sensors (not shown) which are indicative of the operation of the vehicle.

In some embodiments, the safing module 8 receives signals from one or more crash sensors within a vehicle which are configured to sense whether the vehicle is involved in a crash situation. The safing module 8 generates arming state data based on the crash sensor data such that the arming state data can confirm whether or not it is appropriate to activate a safety device.

The master control module 2 further comprises a master data register 9 which is configured to store arming state data generated by the safing module 8. In this embodiment, the master data register 9 is a shift register which receives and stores the arming state data sequentially from the safing module 8.

The master control module 2 further comprises an SPI interface 10 which is coupled to the master data register 9. The SPI interface 10 is configured to be connected to and communicate with the data bus 6. The SPI interface 10 is configured to receive data from the master data register 9 and to transmit the data to the data bus 6. The SPI interface 10 is also configured to receive data from the data bus 6 and to transmit the received data to the master data register 9 as indicated generally by arrow 11 in figure 1.

Each of the slave modules 3-5 comprises a slave module SPI interface 12-14 which is configured to communicate with the data bus 6. Each slave module SPI interface 12-14 is coupled for communication with the data bus 6.

Each slave module 3-5 comprises a slave data register. Figure 1 only shows the slave data register 15 of the first slave module 3 but it is to be appreciated that the other slave modules 4-5 also comprise slave data registers. The slave data registers of each of the slave modules 3-5 are coupled for communication with the SPI interfaces of each slave module 3-5. The slave data registers store data sequentially that is received from the data bus 6 and also output data to the data bus 6 via the SPI interfaces 12-14.

Each slave module 3-5 further comprises a deployment driver module. In figure 1, a deployment driver module 16 is only visible for the first slave module 3 but it is to be appreciated that the other slave modules 4-5 also comprise deployment driver modules. Each deployment driver module is coupled for communication with a respective one of the slave data registers to receive arming state data from the slave data register. Each deployment driver module is configured to receive a crash signal from a crash sensor (not shown) or another component that is configured to output a crash signal in the event that the vehicle is involved in a crash situation or an anticipated crash situation.

Each deployment driver module is configured to output a deployment signal to activate a safety device if it is appropriate to activate the safety device. In figure 1, a safety device 17 is shown coupled to the deployment driver module 16 of the first slave module 3. The safety device 17 may be any kind of vehicle safety device, such as, but not limited to, an air-bag, a seat belt tensioner, a hood or bonnet lifter, a pyrotechnic actuator or fuse or an electrically activated roll bar.

When the vehicle safety system 1 is in operation, the master control module 2 transmits arming state data via the data bus 6 to each of the slave modules 3-5. In this embodiment, the same arming state data is received by each of the slave modules 3-5. The arming state data is stored in the slave module data registers of each slave module 3-5. The arming state data is then processed by each slave module 3-5 to determine whether the arming state data provides a confirmation of a crash situation. If the arming state data provides a confirmation of a crash situation then the slave module communicates a confirmation signal to the deployment driver module. The deployment driver module uses the confirmation signal together with a crash signal to confirm that the deployment driver module should output a deployment signal to activate a safety device.

In this embodiment, each of the slave modules 3-5 is identified by a unique identifier which is encoded or stored in the arming state data. The master control module 2 transmits arming state data comprising at least one of the identifiers via the data bus 6. Each slave module 3-5 receives the arming state data via the data bus 6 and detects whether the arming state data comprises an identifier that matches the identifier of the slave module. If the slave module detects that the arming state data comprises an identifier that matches the slave module's identifier, the slave module processes the arming state data to determine whether or not the arming state data provides a confirmation of a crash situation. If the deployment driver module receives a crash signal and the arming state data provides a confirmation of a crash situation, the deployment driver module outputs a deployment signal to activate a safety device.

If, on the other hand, a slave module does not detect an identifier in the arming state data which matches the slave module's identifier, the slave module does not process the arming state data. In this instance, the slave module does not provide a confirmation signal to the deployment driver module or the slave module provides a confirmation signal to the deployment driver module confirm that there is no crash situation. Consequently, the deployment driver module does not output a deployment signal and the safety device is not activated.

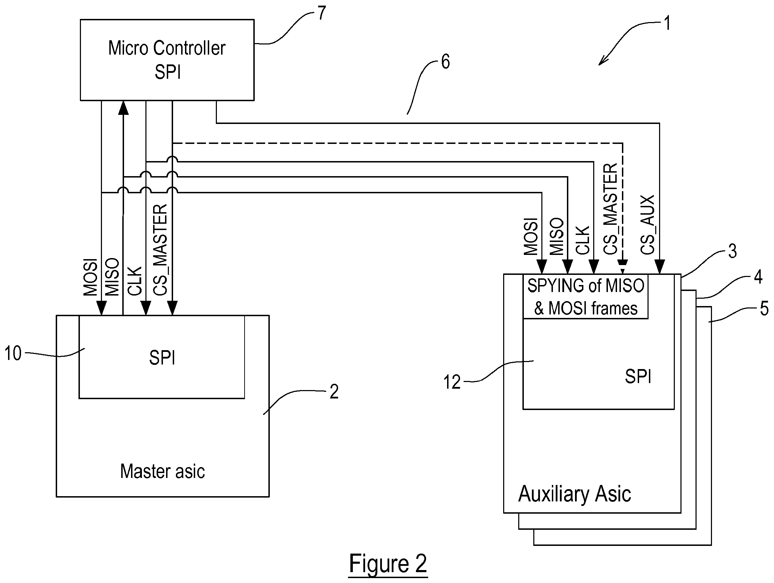

Referring now to figure 2 of the accompanying drawings, the four-wire SPI data bus 6 of the vehicle safety system 1 is shown in further detail. The four wires of the data bus 6 are identified respectively as Master Output Slave Input (MOSI), Master Input Slave Output (MISO), Serial Clock (CLK) and Chip Select (CS_Master). The four wires of the data bus are connected to the master control module 2, each of the slave modules 3-5 and the data bus controller 7.

In this embodiment, an Auxiliary Chip Select (CS_AUX) wire is provided between the data bus controller 7 and each of the slave modules 3-5. The CS_AUX wire provides a notification to the slave modules 3-5 which notifies the slave modules 3-5 of the SPI frame in the data transmitted from the master control unit 2 which carries the arming state data. This removes the need for the slave modules 3-5 to inspect every SPI frame received via the data bus 6 and improves the reliability of the system since the slave modules 3-5 are notified directly of the relevant SPI frame.

The SPI interfaces 10, 12 of the master control module 2 and each of the slave modules 3-5 are configured to transmit and receive data via the SPI data bus 6 using SPI synchronous serial communication. The master control module 2 transmits the arming state data sequentially via the MISO wire to the data bus controller 7 and to each of the slave modules 3-5.

Each slave modules 3-5 monitors data communicated via the MISO and the MOSI connections when the slave modules 3-5 detects a chip select high signal provided via the CS_Master or CS_AUX wires.

The vehicle safety system of this embodiment provides a robust system for activating a safety device while minimising the risk of accidental activation. The use of the data bus to carry the arming state data minimises the number of electrical pins on each slave module since it removes the need for dedicated pins to be provided to receive arming signals. This also serves to reduce the wiring on the printed circuit board within each slave module as compared with conventional approaches which rely on dedicated electrical connection to carry arming signals.

The vehicle safety system of this embodiment is also more robust than conventional systems because the arming state data can carry parity check data and the unique identifier for each slave module. The same arming information is available to all slave modules since all slave modules are connected to the same data bus. The system also enables additional data, such as system or device state data, to be communicated to each slave module via the data bus in addition to the arming state data.

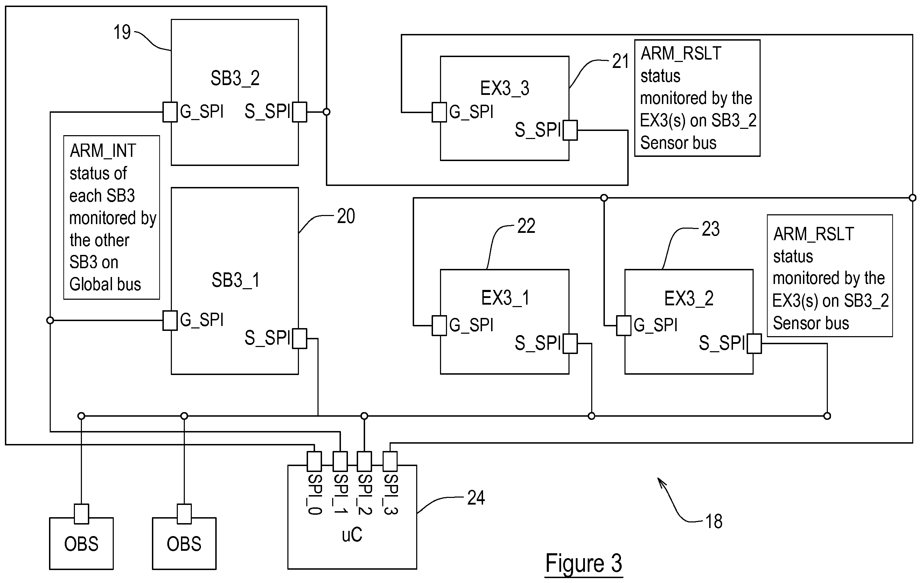

Referring now to figure 3 of the accompanying drawings, a vehicle safety system 18 of a further embodiment comprises two master control modules 19, 20 and three slave modules 21-23. The master control modules 19, 20 are coupled for communication with a global SPI data bus to permit synchronous operation of the two master control modules 19, 20. The vehicle safety system 18 further comprises a sensor data bus which is a separate SPI data bus from the global data bus in order to reduce the SPI bandwidth on the global data bus. In this embodiment, both the global data bus and the sensor data bus are controlled by an SPI controller 24.

The master control modules 19, 20 and each of the slave modules 21-23 comprise a global data bus connection G_SPI which is connected to the global data bus and an S_SPI connection which is connected to the sensor data bus.

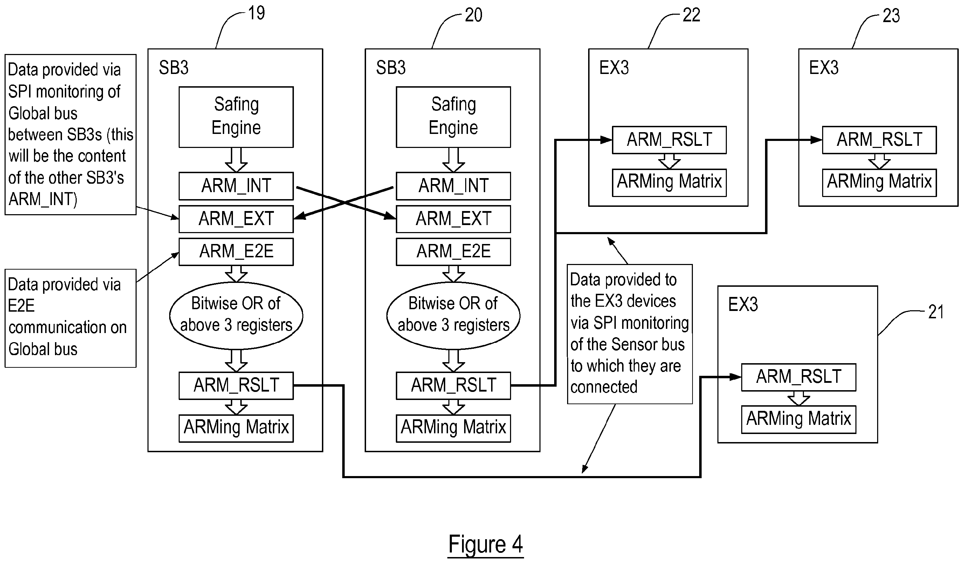

Referring now to figure 4 of the accompanying drawings, each of the master control modules 19, 20 is configured to monitor arming state data provided by the other master control module 19, 20 via the global data bus. Each master control module 19, 20 is configured to process the arming state data and to output arming state data to each slave module 21-23 that is connected to the master control module 19, 20. Each slave module 21-23 processes the arming state data to determine whether the arming state data provides a confirmation of a crash situation in the manner described above.

When used in this specification and claims, the terms "comprises" and "comprising" and variations thereof mean that the specified features, steps or integers are included. The terms are not to be interpreted to exclude the presence of other features, steps or components.

## Claims

1. A vehicle safety system comprising:
two master control modules (19, 20), wherein the master control modules (19, 20) are configured to be coupled to a global data bus in a vehicle to permit synchronous operation of the master control modules (19, 20), and wherein the master control modules (19, 20) are configured to be coupled to a sensor data bus in a vehicle to receive a crash signal from a crash sensor via the sensor data bus, each master control module (19, 20) comprising a respective safing module (8) which is configured to generate arming state data based on a signal from a crash sensor and to output the arming state data via the global data bus, and each master control module (19, 20) being configured to monitor arming state data provided by the other master control module (19, 20) via the global data bus; and
a plurality of slave modules (21-23) which are configured to be coupled to the global data bus and the sensor data bus, wherein each slave module (21-23) comprises a respective deployment driver module (16) which is configured to activate a respective safety device (17) in response to a crash signal, each slave module (21-23) being configured to receive arming state data from the master control modules (19, 20) via the global data bus and process the arming state data to determine whether the arming state data provides a confirmation of a crash situation, wherein if the deployment driver module (16) receives a crash signal and the arming state data provides a confirmation of a crash situation, the deployment driver module (16) is configured to output a deployment signal to activate the respective safety device (17).

2. The system of claim 1, wherein the system further comprises:
a global data bus which is coupled to the master control modules (19, 20) and the slave modules (21-23) to communicate data between the master control modules (19, 20) and the slave modules (21-23).

3. The system of claim 2, wherein the global data bus is a serial peripheral interface bus and the master control modules (19, 20) and the slave modules (21-23) each incorporate a respective serial peripheral interface (12) which is coupled to the serial peripheral interface bus.

4. The system of any one of the preceding claims, wherein each deployment driver module (16) is coupled to a respective safety device (17) and configured to activate the safety device (17) in response to a crash signal and the respective slave module (21-23) determining that the arming state data provides a confirmation of a crash situation.

5. The system of claim 4, wherein the safety device (17) is a vehicle safety device selected from a group including an air-bag, a seat belt tensioner or a bonnet lifter, a pyrotechnic actuator or fuse or an electrically activated roll bar.

6. The system of any one of the preceding claims, wherein each master control module (19, 20) comprises a respective master data register (9) which is configured to store the arming state data.

7. The system of any one of the preceding claims, wherein each slave module (21-23) comprises a respective slave data register (15) which is configured to store arming state data received by the slave module (21-23).

8. The system of any one of the preceding claims, wherein each slave module (21-23) is identified by a unique identifier.

9. The system of claim 8, wherein each master control module (19, 20) is configured to transmit arming state data comprising at least one of the identifiers and each slave module (21-23) is configured to only activate a safety device if the slave module (21-23) detects that the arming state data comprises an identifier that matches the identifier of the slave module (21-23).

10. A method of controlling a vehicle safety system, the method comprising:
receiving a crash signal from a crash sensor via a sensor data bus at two master control modules (19, 20), each master control module (19, 20) comprising a respective safing module (8);
generating, at each safing module (8), arming state data based on the signal from the crash sensor and outputting the arming state data via a global data bus;
monitoring at each master control module (19, 20) arming state data provided by the other master control module (19, 20) via the global data bus;
transmitting the arming state data from each master control module (19, 20) to a plurality of slave modules (21-23) via the global data bus, wherein each slave module (21-23) comprises a respective deployment driver module (16) which is configured to activate a respective safety device (17) in response to a crash signal;
processing the arming state data at the slave module (21-23) to determine whether the arming state data provides a confirmation of a crash situation; and
if the deployment driver module (16) receives a crash signal and the arming state data provides a confirmation of a crash situation, outputting a deployment signal from the deployment driver module (16) to activate the respective safety device (17).

11. The method of claim 10, wherein the global data bus is a serial peripheral interface bus and the master control modules (19, 20) and the slave modules (21-23) each incorporate a respective serial peripheral interface which is coupled to the serial peripheral interface bus.

12. The method of claim 10 or claim 11, wherein the method further comprises:
storing the arming state data in a respective master data register (9) at each master control module (19, 20); and
storing the arming state data in a respective slave data register (15) at each slave module (21-23).

13. The method of any one of claims 10 to 12, wherein each slave module (21-23) is identified by a unique identifier.

14. The method of claim 13, wherein the method further comprises:
transmitting arming state data comprising at least one of the identifiers from each master control module (19, 20) to the slave modules (21-23);
processing the arming state data at each of the slave modules (21-23) to identify an identifier; and
if the arming state data provides a confirmation of a crash situation, only outputting a deployment signal from the deployment driver module (16) to activate a safety device (17) if the slave module (21-23) detects that the arming state data comprises an identifier that matches the identifier of the slave module (21-23).

## Patentansprüche

1. Fahrzeugsicherheitssystem, umfassend:
zwei Master-Steuermodule (19, 20), wobei die Master-Steuermodule (19, 20) dafür konfiguriert sind, an einen globalen Datenbus in einem Fahrzeug gekoppelt zu sein, um synchronen Betrieb der Master-Steuermodule (19, 20) zu ermöglichen, und wobei die Master-Steuermodule (19, 20) dafür konfiguriert sind, an einen Sensordatenbus in einem Fahrzeug gekoppelt zu sein, um ein Crash-Signal von einem Crash-Sensor über den Sensordatenbus zu empfangen, wobei jedes Master-Steuermodul (19, 20) ein jeweiliges Safing-Modul (8) umfasst, das dafür konfiguriert ist, Scharfschaltungszustandsdaten auf Basis eines Signals von einem Crash-Sensor zu erzeugen und die Scharfschaltungszustandsdaten über den globalen Datenbus auszugeben, und wobei jedes Master-Steuermodul (19, 20) dafür konfiguriert ist, von dem anderen Master-Steuermodul (19, 20) über den globalen Datenbus bereitgestellte Scharfschaltungszustandsdaten zu überwachen; und
eine Vielzahl von Slave-Modulen (21-23), die dafür konfiguriert sind, an den globalen Datenbus und den Sensordatenbus gekoppelt zu sein, wobei jedes Slave-Modul (21-23) ein jeweiliges Entfaltungstreibermodul (16) umfasst, das dafür konfiguriert ist, eine jeweilige Sicherheitsvorrichtung (17) als Reaktion auf ein Crash-Signal zu aktivieren, wobei jedes Slave-Modul (21-23) dafür konfiguriert ist, Scharfschaltungszustandsdaten von den Master-Steuermodulen (19, 20) über den globalen Datenbus zu empfangen und die Scharfschaltungszustandsdaten zu verarbeiten, um zu bestimmen, ob die Scharfschaltungszustandsdaten eine Bestätigung einer Crash-Situation liefern, wobei, wenn das Entfaltungstreibermodul (16) ein Crash-Signal empfängt und die Scharfschaltungszustandsdaten eine Bestätigung einer Crash-Situation liefern, das Entfaltungstreibermodul (16) dafür konfiguriert ist, ein Entfaltungssignal auszugeben, um die jeweilige Sicherheitsvorrichtung (17) zu aktivieren.

2. System nach Anspruch 1, wobei das System ferner umfasst:
einen globalen Datenbus, der an die Master-Steuermodule (19, 20) und die Slave-Module (21-23) gekoppelt ist, um Daten zwischen den Master-Steuermodulen (19, 20) und den Slave-Modulen (21-23) zu übermitteln.

3. System nach Anspruch 2, wobei der globale Datenbus ein serieller peripherer Schnittstellenbus ist und die Master-Steuermodule (19, 20) und die Slave-Module (21 - 23) jeweils eine jeweilige serielle periphere Schnittstelle (12) inkorporieren, die an den seriellen peripheren Schnittstellenbus gekoppelt ist.

4. System nach einem der vorhergehenden Ansprüche, wobei jedes Entfaltungstreibermodul (16) an eine entsprechende Sicherheitsvorrichtung (17) gekoppelt und dafür konfiguriert ist, die Sicherheitsvorrichtung (17) als Reaktion auf ein Crash-Signal zu aktivieren, und das entsprechende Slave-Modul (21-23) bestimmt, dass die Scharfschaltungszustandsdaten eine Bestätigung einer Crash-Situation liefern.

5. System nach Anspruch 4, wobei die Sicherheitsvorrichtung (17) eine Fahrzeugsicherheitsvorrichtung ist, die aus einer Gruppe einschließlich eines Airbags, eines Sicherheitsgurtstraffers oder eines Motorhaubenhebers, einer pyrotechnischen Betätigungsvorrichtung oder Sicherung oder eines elektrisch aktivierten Überrollbügels ausgewählt ist.

6. System nach einem der vorhergehenden Ansprüche, wobei jedes Master-Steuermodul (19, 20) ein jeweiliges Master-Datenregister (9) umfasst, das dafür konfiguriert ist, die Scharfschaltungszustandsdaten zu speichern.

7. System nach einem der vorhergehenden Ansprüche, wobei jedes Slave-Modul (21-23) ein jeweiliges Slave-Datenregister (15) umfasst, das dafür konfiguriert ist, die von dem Slave-Modul (21-23) empfangenen Scharfschaltungszustandsdaten zu speichern.

8. System nach einem der vorhergehenden Ansprüche, wobei jedes Slave-Modul (21-23) von einer eindeutigen Kennung identifiziert wird.

9. System nach Anspruch 8, wobei jedes Master-Steuermodul (19, 20) dafür konfiguriert ist, Scharfschaltungszustandsdaten zu übertragen, die mindestens eine der Kennungen umfassen, und jedes Slave-Modul (21-23) dafür konfiguriert ist, eine Sicherheitsvorrichtung nur dann zu aktivieren, wenn das Slave-Modul (21-23) detektiert, dass die Scharfschaltungszustandsdaten eine Kennung umfassen, die mit der Kennung des Slave-Moduls (21-23) übereinstimmt.

10. Verfahren zum Steuern eines Fahrzeugsicherheitssystems, wobei das Verfahren umfasst:
Empfangen eines Crash-Signals von einem Crash-Sensor über einen Sensordatenbus an zwei Master-Steuermodulen (19, 20), wobei jedes Master-Steuermodul (19, 20) ein jeweiliges Safing-Modul (8) umfasst;
Erzeugen, an jedem Safing-Modul (8), von Scharfschaltungszustandsdaten auf Basis des Signals von dem Crash-Sensor und Ausgeben der Scharfschaltungszustandsdaten über einen globalen Datenbus;
Überwachen, an jedem Master-Steuermodul (19, 20), von Scharfschaltungszustandsdaten, die von dem anderen Master-Steuermodul (19, 20) über den globalen Datenbus bereitgestellt werden;
Übertragen der Scharfschaltungszustandsdaten von jedem Master-Steuermodul (19, 20) an eine Vielzahl von Slave-Modulen (21-23) über den globalen Datenbus, wobei jedes Slave-Modul (21-23) ein jeweiliges Entfaltungstreibermodul (16) umfasst, das dafür konfiguriert ist, eine jeweilige Sicherheitsvorrichtung (17) als Reaktion auf ein Crash-Signal zu aktivieren;
Verarbeiten der Scharfschaltungszustandsdaten an dem Slave-Modul (21-23), um zu bestimmen, ob die Scharfschaltungszustandsdaten eine Bestätigung einer Crash-Situation liefern; und
wenn das Entfaltungstreibermodul (16) ein Crash-Signal empfängt und die Scharfschaltungszustandsdaten eine Bestätigung einer Crash-Situation liefern, Ausgeben eines Entfaltungssignals von dem Entfaltungstreibermodul (16), um die jeweilige Sicherheitsvorrichtung (17) zu aktivieren.

11. Verfahren nach Anspruch 10, wobei der globale Datenbus ein serieller peripherer Schnittstellenbus ist und die Master-Steuermodule (19, 20) und die Slave-Module (21-23) jeweils eine jeweilige serielle periphere Schnittstelle inkorporieren, die an den seriellen peripheren Schnittstellenbus gekoppelt ist.

12. Verfahren nach Anspruch 10 oder Anspruch 11, wobei das Verfahren ferner umfasst:
Speichern der Scharfschaltungszustandsdaten in einem jeweiligen Master-Datenregister (9) an jedem Master-Steuermodul (19, 20); und
Speichern der Scharfschaltungszustandsdaten in einem jeweiligen Slave-Datenregister (15) an jedem Slave-Modul (21-23).

13. Verfahren nach einem der Ansprüche 10 bis 12, wobei jedes Slave-Modul (21 - 23) von einer eindeutigen Kennung identifiziert wird.

14. Verfahren nach Anspruch 13, wobei das Verfahren ferner umfasst:
Übertragen von Scharfschaltungszustandsdaten, die mindestens eine der Kennungen umfassen, von jedem Master-Steuermodul (19, 20) an die Slave-Module (21-23);
Verarbeiten der Scharfschaltungszustandsdaten in jedem der Slave-Module (21-23), um eine Kennung zu identifizieren; und
wenn die Scharfschaltungszustandsdaten eine Bestätigung einer Crash-Situation liefern, lediglich Ausgeben eines Entfaltungssignals von dem Entfaltungstreibermodul (16), um eine Sicherheitsvorrichtung (17) zu aktivieren, wenn das Slave-Modul (21-23) detektiert, dass die Scharfschaltungszustandsdaten eine Kennung umfassen, die mit der Kennung des Slave-Moduls (21-23) übereinstimmt.

## Revendications

1. Système de sécurité de véhicule comprenant :
deux modules de commande maîtres (19, 20), dans lesquels les modules de commande maîtres (19, 20) sont configurés pour être couplés avec un bus de données globales dans un véhicule afin de permettre aux modules de commande maîtres (19, 20) de fonctionner de manière synchronisée, et dans lesquels les modules de commande maîtres (19, 20) sont configurés pour être couplés avec un bus de données de capteur dans un véhicule pour recevoir un signal de collision d'un capteur de collision par le biais du bus de données de capteur, chaque module de commande maître (19, 20) comprenant un module de sécurité (8) configuré pour générer des données d'état d'armement basées sur un signal reçu d'un capteur de collision et pour transmettre les données d'état d'armement par le biais du bus de données globales, et chaque module de commande maître (19, 20) étant configuré pour surveiller les données d'état d'armement fournies par l'autre module de commande maître (19, 20) par le biais du bus de données globales ; et
une pluralité de modules esclaves (21-23) configurés pour être couplés au bus de données globales et au bus de données de capteur, dans lesquels chaque module esclave (21-23) comprend un module de pilote de déploiement respectif (16) configuré pour activer un dispositif de sécurité respectif (17) en réponse à un signal de collision, chaque module esclave (21-23) étant configuré pour recevoir des données d'état d'armement émis par les modules de commande maîtres (19, 20) par le biais du bus de données globales et pour traiter les données d'état d'armement afin de déterminer si les données d'état d'armement fournissent la confirmation d'une situation de collision, dans lesquels si le module de pilote de déploiement (16) reçoit un signal de collision et les données d'état d'armement fournissent la confirmation d'une situation de collision, le module de pilote de déploiement (16) est configuré pour transmettre un signal de déploiement pour activer le dispositif de sécurité respectif (17).

2. Système selon la revendication 1, dans lequel le système comprend en outre :
un bus de données globales couplé avec les modules de commande maîtres (19, 20) et les modules esclaves (21-13) pour communiquer des données entre les modules de commande maîtres (19, 20) et les modules esclaves (21-23).

3. Système selon la revendication 2, dans lequel le bus de données globales est un bus d'interface périphérique série et les modules de commande maîtres (19, 20) et les modules esclaves (21-23) intègrent chacun une interface périphérique série respective (12) couplée avec le bus d'interface périphérique série.

4. Système selon l'une quelconque des revendications précédentes, dans lequel le module de pilote de déploiement (16) est couplé avec un dispositif de sécurité (17) et configuré pour activer le dispositif de sécurité (17) en réponse à un signal de collision et le module esclave respectif (21-23) détermine que les données d'état d'armement fournissent la confirmation d'une situation de collision.

5. Système selon la revendication 4, dans lequel le dispositif de sécurité (17) est un dispositif de sécurité de véhicule choisi dans un groupe comprenant un coussin de sécurité gonflable, un tendeur de ceinture de sécurité ou un dispositif de levage de capot, un actionneur pyrotechnique ou un fusible ou une barre de roulement activée électriquement.

6. Système selon l'une quelconque des revendications précédentes, dans lequel chaque module de commande maître (19, 20) comprend un registre de données maître (9) configuré pour stocker les données d'état d'armement.

7. Système selon l'une quelconque des revendications précédentes, dans lequel chaque module esclave (21-23) comprend un registre de données esclave (15) configuré pour stocker des données d'état d'armement reçues par le module esclave (21-23).

8. Système selon l'une quelconque des revendications précédentes, dans lequel chaque module esclave (21-23) est identifié par un identifiant unique.

9. Système selon la revendication 8, dans lequel chaque module de commande maître (19, 20) est configuré pour transmettre des données d'état d'armement comprenant au moins l'un des identifiants et chaque module esclave (21-23) est configuré pour activer un dispositif de sécurité uniquement si le module esclave (21-23) détecte que les données d'état d'armement comprennent un identifiant qui correspond à l'identifiant du module esclave (21-23).

10. Procédé de commande d'un système de sécurité de véhicule, le procédé comprenant :
la réception d'un signal de collision d'un capteur de collision par le biais d'un bus de données de capteur au niveau des deux modules de commande maîtres (19, 20), chaque module de commande maître (19, 20) comprenant un module de sécurité respectif (8) ;
la génération au niveau de chaque module de sécurité (8), de données d'état d'armement basées sur le signal du capteur de collision et la transmission des données d'état d'armement par le biais d'un bus de données globales ;
la surveillance au niveau de chaque module de commande maître (19, 20) des données d'état d'armement fournies par l'autre module de commande maître (19, 20) par le biais du bus de données globales ;
la transmission de données d'état d'armement par chaque module de commande maître (19, 20) vers une pluralité de modules esclaves (21-23) par le biais du bus de données globales, chaque module esclave (21-23) comprenant un module de pilote de déploiement respectif (16) configuré pour activer un dispositif de sécurité respectif (17) en réponse à un signal de collision ;
le traitement des données d'état d'armement au niveau du module esclave (21-23) pour déterminer si les données d'état d'armement fournissent la confirmation d'une situation de collision ; et
si le module de pilote de déploiement (16) reçoit un signal de collision et les données d'état d'armement fournissent la confirmation d'une situation de collision, la transmission d'un signal de déploiement depuis le module de pilote de déploiement (16) afin d'activer le dispositif de sécurité respectif (17).

11. Procédé selon la revendication 10, dans lequel le bus de données globales est un bus d'interface périphérique série et les modules de commande maîtres (19, 20) et les modules esclaves (21-23) intègrent chacun une interface périphérique série respective couplée avec le bus d'interface périphérique série.

12. Procédé selon la revendication 10 ou la revendication 11, dans lequel le procédé comprend en outre :
le stockage des données d'état d'armement dans un registre de données maître respectif (9) au niveau de chaque module de commande maître (19, 20) ; et
le stockage des données d'état d'armement dans un registre de données esclave respectif (15) au niveau de chaque module esclave (21-23).

13. Procédé selon l'une quelconque des revendications 10 à 12, dans lequel chaque module esclave (21-23) est identifié par un identifiant unique.

14. Procédé selon la revendication 13, dans lequel le procédé comprend en outre :
la transmission de données d'état d'armement comprenant au moins l'un des identifiants de chaque module de commande maître (19, 20) aux modules esclaves (21-23) ;
le traitement des données d'état d'armement au niveau de chaque module esclave (21-23) afin d'identifier un identifiant ; et
si les données d'état d'armement fournissent la confirmation d'une situation de collision, la transmission d'un signal de déploiement du pilote de déploiement (16) pour activer un dispositif de sécurité (17) uniquement si le module esclave détecte (21-23) que les données d'état d'armement comprennent un identifiant correspondant à l'identifiant du module esclave (21-23).
